# EUROPEAN PATENT APPLICATION

(11) **EP 3 955 360 A1**
(43) Date of publication of application: **16.02.2022**
(21) Application number: 20792208.9
(22) Date of filing: 20.04.2020
(51) Int. Cl.: H01M 10/0562, H01M 10/0565, H01M 10/42, H01M 4/62, H01M 4/13, H01M 10/052

(54) **SOLID ELECTROLYTE COMPOSITE AND ALL-SOLID-STATE BATTERY ELECTRODE COMPRISING SAME**

(30) Priority: 19.04.2019 KR 20190046309
(71) Applicant: LG ENERGY SOLUTION, LTD., Seoul 07335 (KR)
(72) Inventor: KIM, Eun-Bee, Daejeon 34122 (KR); RYU, Ji-Hoon, Daejeon 34122 (KR); LEE, Suk-Woo, Daejeon 34122 (KR); LEE, Jung-Pil, Daejeon 34122 (KR)
(74) Representative: Plasseraud IP
(86) International application number: PCT/KR2020/005230
(87) International publication number: WO 2020/214009

(57) **Abstract**

A solid electrolyte composite according to the present disclosure comprises a solid electrolyte material and a passivation film covering the surface of the solid electrolyte material. For example, the composite has a core-shell structure comprising a particulate solid electrolyte material and a passivation film covering the surface of the solid electrolyte.

## Description

### TECHNICAL FIELD

The present application claims the benefit of Korean Patent Application No. 10-2019-0046309 filed on April 19, 2019 with the Korean Intellectual Property Office, the disclosure of which is incorporated herein by reference in its entirety. The present disclosure relates to a novel solid electrolyte composite and an electrode for an all-solid-state battery comprising the solid electrolyte composite in at least one of a negative electrode and a positive electrode.

### BACKGROUND ART

Compared to batteries using liquid electrolytes, all-solid-state batteries using solid electrolyte materials have the enhanced safety, prevent the leakage of the electrolytes, leading to improved reliability of the batteries, and are easy to manufacture thin batteries. Additionally, they have the improved energy density due to the use of lithium metal for the negative electrode, and accordingly, together with small secondary batteries, they gain much attention in expectation of high capacity secondary batteries for electric vehicles.

Since the all-solid-state batteries use solid electrolytes instead of liquid electrolytes, to create an environment for ion movement as in liquid electrolyte batteries in which the electrode is impregnated with liquid electrolyte, i.e., to achieve similar ionic conductivity to batteries using liquid electrolytes, a large amount of solid electrolyte materials is included in the electrode (the positive electrode and the negative electrode).

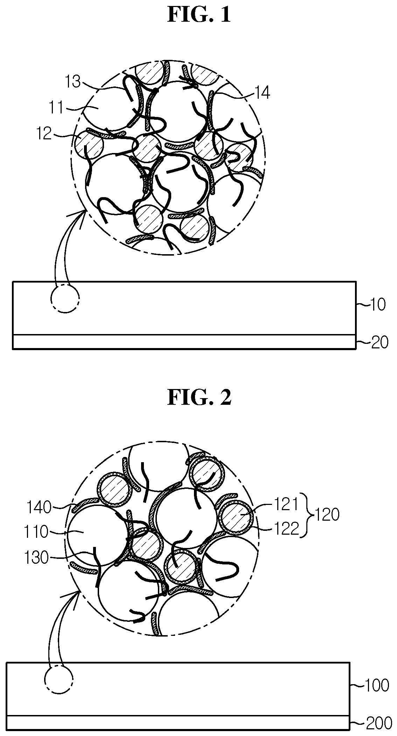

The solid electrolyte material in the electrode comes into contact with the electrode active material or the conductive material, and in this case, electrons may move to the solid electrolyte material. Particularly, in the case of the negative electrode, when the potential reduces, for example, during charging, side reactions may occur such as reduction and decomposition of the solid electrolyte material below a specific potential. FIG. 1 schematically illustrates the side reaction mechanism. FIG. 1 illustrates parts of the negative electrode for the conventional all-solid-state battery, schematically showing the negative electrode including a negative electrode active material layer 10 on at least one surface of a current collector 20, in which a negative electrode active material 11, a solid electrolyte material 12, a conductive material 13, and a binder 14 are mixed in the negative electrode active material layer. For example, when a graphite-based material is used as the negative electrode active material, side reactions increase and initial efficiency reduces due to low reduction stability of the solid electrolyte included in the negative electrode, which makes it difficult to develop high energy density batteries.

### DISCLOSURE

### Technical Problem

The present disclosure is designed to solve the above-described technical problem, and therefore the present disclosure is directed to providing a solid electrolyte material with less side reaction in an electrode and an electrode comprising the same. These and other objects and advantages of the present disclosure will be understood by the following description. Additionally, it will be readily appreciated that the objects and advantages of the present disclosure may be realized by means or methods described in the appended claims and a combination thereof.

### Technical Solution

The present disclosure relates to a solid electrolyte composite of an all-solid-state battery. A first aspect of the present disclosure provides the solid electrolyte composite comprising a particulate solid electrolyte material, and a passivation film covering all or at least part of the solid electrolyte material, wherein the passivation film has ionic conductivity of 1 X 10⁻⁵ s/cm or above and electronic conductivity of 1 X 10⁻⁹ s/cm or less.

According to a second aspect of the present disclosure, in the first aspect, the passivation film is 10 nm to 1 µm in thickness.

According to a third aspect of the present disclosure, in any one of the first and second aspects, the passivation film comprises a polyvinylene carbonate-based polymer.

According to a fourth aspect of the present disclosure, in the third aspect, the polyvinylene carbonate-based polymer comprises vinylene carbonate as a polymerizable unit.

According to a fifth aspect of the present disclosure, in the fourth aspect, the polyvinylene carbonate-based polymer comprises vinylene carbonate as a polymerizable unit, and further comprises a second polymerizable unit that can be polymerized with the vinylene carbonate, and the second polymerizable unit is at least one selected from acrylonitrile, methyl methacrylate, styrene, vinyl pyrrolidone, vinyl acetate, vinyl alcohol and vinyl chloride.

According to a sixth aspect of the present disclosure, in any one of the first to fifth aspects, the solid electrolyte material comprises at least one selected from a polymer-based solid electrolyte, an oxide-based solid electrolyte and a sulfide-based solid electrolyte.

According to a seventh aspect of the present disclosure, in the sixth aspect, the oxide-based solid electrolyte contains oxygen (O) and has ionic conductivity of a metal belonging to Group I or Group II of the periodic table, and the oxide-based solid electrolyte comprises at least one of LLTO-based compound, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compound, LATP-based compound, Li_{1 + x}Ti₂₋ₓAlₓSi_{y}(PO₄)_{3-y} (0 ≤ x ≤ 1, 0 ≤ y ≤ 1), LiAlₓZr₂₋ₓ(PO₄)₃ (0 ≤ x ≤ 1, 0 ≤ y ≤ 1), LiTiₓZr₂₋ₓ(PO₄)₃ (0 ≤ x ≤ 1, 0 ≤ y ≤ 1), LISICON-based compound, LIPON-based compound, perovskite-based compound, NASICON-based compound and LLZO-based compound.

An eighth aspect of the present disclosure relates to an electrode for an all-solid-state battery, the electrode comprising a solid electrolyte composite, an electrode active material and a conductive material, wherein the solid electrolyte composite is defined in any one aspect of the present disclosure.

A ninth aspect of the present disclosure relates to an all-solid-state battery comprising a solid electrolyte composite, wherein the solid electrolyte composite is defined in any one aspect of the present disclosure.

According to a tenth aspect of the present disclosure, in the ninth aspect, the all-solid-state battery comprises a negative electrode, a positive electrode and a solid electrolyte membrane interposed between the negative electrode and the positive electrode, and either the negative electrode or the positive electrode or both comprise the solid electrolyte composite.

An eleventh aspect of the present disclosure relates to a method for manufacturing the solid electrolyte composite according to the present disclosure, the method comprising (S1) coating a passivation layer composition on a surface of a particulate solid electrolyte material, and (S2) providing the coated solid electrolyte material to polymerization reaction, wherein the passivation layer composition comprises vinylene carbonate, a lithium salt, a polymerization initiator and a non-aqueous organic solvent.

### Advantageous Effects

In the solid electrolyte composite according to the present disclosure, an ion conductive passivation film is formed on the surface of the solid electrolyte material, and when applied to the electrode, electron transfer paths between the solid electrolyte and the electrode active material/conductive material in the electrode are blocked, so reduction reactions do not occur during initial charging, thereby preventing the deterioration of the solid electrolyte. In addition, as a result, it is possible to realize all-solid-state batteries with improved initial efficiency and high energy density.

### BRIEF DESCRIPTION OF THE DRAWINGS

The accompanying drawings illustrate a preferred embodiment of the present disclosure, and together with the detailed disclosure, serve to provide a further understanding of the technical aspects of the present disclosure, and the present disclosure should not be construed as being limiting to the drawings. In the drawings, for clarity of description, the shape, size, scale or proportion of the elements may be exaggerated for emphasis.
FIG. 1 is a schematic diagram of an electrode comprising a conventional solid electrolyte material.
FIG. 2 is a schematic diagram of an electrode comprising a solid electrolyte composite according to the present disclosure.

### DETAILED DESCRIPTION

Hereinafter, the embodiments of the present disclosure will be described in detail. Prior to the description, it should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation. Therefore, the context in the embodiments described herein is just a most preferred embodiment of the present disclosure, but not intended to fully describe the technical aspects of the present disclosure, so it should be understood that other equivalents and modifications could have been made thereto at the time the application was filed.

The term ┌comprises┘ when used in this specification, specifies the presence of stated elements, but does not preclude the presence or addition of one or more other elements, unless the context clearly indicates otherwise.

The terms ┌about┘ and ┌substantially┘ are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

┌and/or B┘ when used in this specification, specifies ┌either A or B or both┘.

The terms as used in the following detailed description are for the purpose of convenience, but not intended to being limiting. The terms 'right', 'left' 'top' and 'bottom' refer to the directions in the drawings to which reference is made. The terms 'inward' and 'outward' refer to the directions toward or away from the geometrical centers of the designated devices, systems and elements thereof. The terms 'front', 'rear', 'up', 'down' and related words and phrases refer to the locations and directions in the drawings to which reference is made and are not limiting. These terms include the above words and their derivatives and synonyms.

The present disclosure relates to a solid electrolyte material and an electrode for an all-solid-state battery comprising the same.

### (1) Solid electrolyte composite

A solid electrolyte composite according to the present disclosure includes a solid electrolyte material and a passivation film covering the surface of the solid electrolyte material. For example, the solid electrolyte composite has a core-shell structure including a particulate solid electrolyte material and a passivation film covering at least part or all of the surface of the solid electrolyte.

In an embodiment of the present disclosure, the solid electrolyte material may include at least one selected from a polymer-based solid electrolyte, an oxide-based solid electrolyte and a sulfide-based solid electrolyte.

The polymer-based solid electrolyte is a composite of a lithium salt and a polymer resin, i.e., a polymer electrolyte material formed by adding a polymer resin to a solvated lithium salt, and may exhibit ionic conductivity of about 1 x 10⁻⁷ S/cm or above, and preferably about 1 x 10⁻⁵ S/cm or above.

Non-limiting examples of the polymer resin may include at least one of polyether-based polymer, polycarbonate-based polymer, acrylate-based polymer, polysiloxane-based polymer, phosphazene-based polymer, polyethylene derivatives, alkylene oxide derivatives such as polyethylene oxide, phosphate ester polymer, poly agitation lysine, polyester sulfide, polyvinyl alcohol, polyvinylidene fluoride and polymer including ionic dissociable groups. Additionally, the polymer resin may include, for example, a comb-like polymer resin, a crosslinked polymer resin and a branched copolymer obtained by copolymerization of a comonomer of amorphous polymer such as PMMA, polycarbonate, polysiloxane (pdms) and/or phosphazene in the main chain of polyethylene oxide (PEO), and the polymer electrolyte may include at least one of them as the polymer resin.

In the electrolyte of the present disclosure, the lithium salt is an ionizable lithium salt and may be represented as Li⁺X⁻. The anion of the lithium salt is not particularly limited, and may include, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The oxide-based solid electrolyte material contains oxygen (O) and has ionic conductivity of metal belonging to Group I or II of the periodic table. Non-limiting examples of the oxide-based solid electrolyte material may include at least one selected from LLTO-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (0 ≤ x ≤ 1, 0 ≤ y ≤ 1), LiAlₓZr₂₋ₓ(PO₄)₃ (0 ≤ x ≤ 1, 0 ≤ y ≤ 1), LiTiₓZr₂₋ₓ(PO₄)₃ (0 ≤ x ≤ 1, 0 ≤ y ≤ 1), LISICON-based compounds, LIPON-based compounds, perovskite-based compounds, NASICON-based compounds and LLZO-based compounds. However, the oxide-based solid electrolyte material is not particularly limited thereto.

The sulfide-based solid electrolyte material contains sulfur (S) and has ionic conductivity of metal belonging to Group I or Group II of the periodic table, and may include Li-P-S-based glass or Li-P-S-based glass ceramics. Non-limiting examples of the sulfide-based solid electrolyte may include at least one of Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS. However, the sulfide-based solid electrolyte material is not particularly limited thereto.

In the present disclosure, the passivation film covers the particulate solid electrolyte material, and has low or no electrical conductivity, and at the same time, has ionic conductivity. In an embodiment of the present disclosure, the passivation film preferably has ionic conductivity of at least 10⁻⁵ S/cm or above, and preferably 10⁻³ S/cm or above. In addition, the passivation film has electrical conductivity of 10⁻⁹ S/cm or less.

In the present disclosure, the passivation film includes polyvinylene carbonate-based polymer. In an embodiment of the present disclosure, the polyvinylene carbonate-based polymer may include vinylene carbonate as a polymerizable unit, and may further include a second polymerizable unit that can be polymerized with the vinylene carbonate. Non-limiting examples of the second polymerizable unit may include at least one selected from acrylonitrile, methyl methacrylate, styrene, vinyl pyrrolidone, vinyl acetate, vinyl alcohol and vinyl chloride. In a specific embodiment of the present disclosure, the polyvinylene carbonate-based polymer may include at least one of a polyvinylene carbonate homopolymer including vinylene carbonate as a polymerizable unit and a copolymer including vinylene carbonate and a second polymerizable unit. In the specification, the polymerizable unit refers to all units that form a polymer by polymerization, for example, monomer, dimer, trimmer and oligomer.

FIG. 2 is a schematic diagram of an electrode, to be exact, a negative electrode including the solid electrolyte composite according to the present disclosure. Referring to FIG. 2, a negative electrode active material layer 100 is formed on at least one surface of a negative electrode current collector 200, and a negative electrode active material 110, a solid electrolyte composite 120, a conductive material 130 and a binder 140 are mixed in the negative electrode active material layer. Referring to FIG. 2, the solid electrolyte composite 120 includes a particulate solid electrolyte material 121 and an ion conductive passivation film 122 covering the surface of the particulate solid electrolyte material 121, and the passivation film has low or little electronic conductivity, thereby preventing side reactions with the electrode active material or the conductive material.

Subsequently, a method for preparing the solid electrolyte composite will be described.

The passivation film may be formed by coating a particulate solid electrolyte material with a solution including a passivation film composition. First, a polyvinylene carbonate-based polymer and a particulate solid electrolyte material are mixed with a non-aqueous organic solvent and stirred to prepare a uniform passivation film composition. Additionally, a lithium salt is preferably introduced into the composition. In this instance, the solid electrolyte is preferably present in an amount of 1 wt% to 50 wt% based on the passivation film composition. A passivation film may be formed on the surface of the particulate solid electrolyte material by removing the solvent using evaporation while stirring the passivation film composition. The non-aqueous organic solvent may include, but is not limited to, tetrahydrofuran, acetonitrile, dimethyl sulfoxide, dimethyl formamide, N-methyl pyrrolidone, chloroform and acetone. In an embodiment of the present disclosure, the organic solvent may include at least one of them. Additionally, in a specific embodiment, the passivation film component including the polyvinylene carbonate-based polymer is present in an amount of 5 wt% to 50 wt% based on 100 wt% of the passivation film composition.

Alternatively, the solid electrolyte composite may have a passivation layer formed by coating a polymerizable unit such as vinylene carbonate on the surface of the solid electrolyte material, followed by polymerization. That is, in an embodiment of the present disclosure, the solid electrolyte composite may be obtained by (S1) coating a passivation layer composition on the surface of the particulate solid electrolyte material, and (S2) providing the coated solid electrolyte material to polymerization reaction so that the polymerizable unit forms a polymer. Describing in more detail, a polymerizable unit of polyvinylene carbonate-based polymer, a particulate solid electrolyte material, a lithium salt and a polymerization initiator are mixed with a non-aqueous organic solvent to prepare a passivation film composition, and the solvent is removed to obtain a composite precursor coated with a passivation film precursor. The solvent removal may be performed by drying. Subsequently, a passivation film including the polyvinylene carbonate-based polymer may be formed on the surface of the particulate solid electrolyte material by polymerization of the polymerizable unit by heating or UV irradiation of the composite precursor.

In the present disclosure, the polymerization initiator may be at least one suitable polymerization initiator selected from an azo-based initiator and a peroxide initiator, and is not limited thereto. For example, the polymerization initiator may include an azo-based initiator, and in the present disclosure, the polymerization initiator may be at least one suitable polymerization initiator selected from an azo-based initiator and a peroxide initiator, and is not limited thereto. For example, the polymerization initiator may include an azo-based initiator, and its specific example may include at least one of 2,2'-azobis[isobutyronitrile] (AIBN), 2,2'-azobis(2,4-dimethylvaleronitrile), 2,2'-azobis[2-methylbutyronitrile], azobis isobutanol diacetate, 1,1-azobiscyclohexane carbonitrile and 2-pheny azo 2,4-dimethyl-4-methoxyvaleronitrile.

In the present disclosure, the lithium salt is ionizable and may be represented by Li⁺X⁻. The anion of the lithium salt may include, is not limited to, at least one of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

According to an embodiment of the present disclosure, the thickness of the passivation film may range from 10 nm to 1 µm. When the thickness of the passivation film is smaller than 10 nm, it is impossible to suppress side reactions caused by electron movement in the electrode. On the other hand, when the thickness of the passivation film is larger than 1 µm, high resistance occurs at the interface and battery characteristics may be deteriorated.

### (2) Electrode and all-solid-state battery comprising the same

The present disclosure provides an electrode comprising the above-described solid electrolyte composite and an all-solid-state battery comprising the electrode. The all-solid-state battery comprises a positive electrode, a negative electrode and a solid electrolyte membrane. In an embodiment of the present disclosure, the negative electrode may comprise a carbon-based material as a negative electrode active material.

In the present disclosure, the positive electrode and the negative electrode comprises a current collector and an electrode active material layer on at least one surface of the current collector, and the active material layer comprises electrode active material particles and a solid electrolyte composite according to the present disclosure. Additionally, each electrode may further comprise at least one of a conductive material and a binder resin where necessary. Additionally, the electrode may further comprise various types of additives to supplement or improve the physical and chemical properties of the electrode.

In the present disclosure, the negative electrode active material may include a carbon-based material. The carbon-based material may be at least one selected from the group consisting of crystalline artificial graphite, crystalline natural graphite, amorphous hard carbon, low crystalline soft carbon, carbon black, acetylene black, graphene and fibrous carbon. Preferably, the carbon-based material may include crystalline artificial graphite and/or crystalline natural graphite. Additionally, any material that can be used as negative electrode active materials in all-solid-state batteries may be further used. For example, the negative electrode active material may further include at least one selected from lithium metal; metal composite oxide such as LiₓFe₂O₃ (0 ≤ x ≤ 1), LiₓWO₂ (0 ≤ x ≤ 1), SnₓMe₁₋ₓMe'_{y}O_{z} (Me: Mn, Fe, Pb, Ge; Me' : Al, B, P, Si, Group I, Group II, Group III elements of the periodic table, halogen (0 < x ≤ 1 ; 1 ≤ y ≤3 ; 1 ≤ z ≤ 8); lithium alloys; silicon-based alloys; tin-based alloys; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃ Bi₂O₄, and Bi₂O₅; conductive polymer such as polyacetylene; Li-Co-Ni based materials; titanium oxide; lithium titanium oxide.

The electrode active material of the positive electrode may include, without limitation, any type of positive electrode active material of lithium ion secondary batteries. For example, the positive electrode active material may include layered compounds such as lithium cobalt oxide (LiCoO₂) and lithium nickel oxide (LiNiO₂) or compounds with one or more transition metal substitution; lithium manganese oxide of Formula Li₁₊ₓMn₂-ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅ and Cu₂V₂O₇; Ni-site type lithium nickel oxide represented by Formula LiNi₁₋ₓMₓO₂ (M = Co, Mn, Al, Cu, Fe, Mg, B or Ga, and x = 0.01 to 0.3); lithium manganese composite oxide represented by Formula LiMn₁₋ₓMₓO₂ (M = Co, Ni, Fe, Cr, Zn or Ta, x = 0.01 to 0.1) or Li₂Mn₃MO₈ (M = Fe, Co, Ni, Cu or Zn); lithium manganese composite oxide of spinel structure represented by LiNiₓMn₂₋ₓO₄; LiMn₂O₄ with partial substitution of alkali earth metal ion for Li in Formula; disulfide compounds; Fe₂(MoO₄)₃. However, the positive electrode active material is not limited thereto.

In the present disclosure, the current collector may be, for example, a metal plate that exhibits electrical conductivity, and a suitable current collector may be used according to the polarity of the electrode among the current collectors that are well known in the field of secondary batteries.

In the present disclosure, the conductive material is generally included in an amount of 1 wt% to 30 wt% based on the total weight of the mixture including the electrode active material. The conductive material is not limited to a particular type and may include those having conductivity without causing a chemical change in the corresponding battery, for example, at least one selected from graphite such as natural graphite or artificial graphite; carbon black such as carbon black, acetylene black, ketjen black, channel black, furnace black, lamp black, and thermal black; conductive fibers such as carbon fibers or metal fibers; metal powder such as fluorocarbon, aluminum and nickel powder; conductive whiskers such as zinc oxide and potassium titanate; conductive metal oxide such as titanium oxide; conductive materials such as polyphenylene derivatives.

In the present disclosure, the binder resin is not limited to a particular type and may include any type of component that assists in the binding of the active material and the conductive material and binding to the current collector, for example, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber, fluorine rubber and a variety of copolymers. The binder resin may be generally included in the range of 1 wt% to 30 wt%, or 1 wt% to 10 wt% based on 100 wt% of the electrode layer.

In the present disclosure, each electrode active material layer may comprise at least one type of additive of an oxidation stabilizing agent, a reduction stabilizing agent, a flame retardant, a heat stabilizer and an antifogging agent where necessary.

Meanwhile, the present disclosure relates to an all-solid-state battery comprising the electrode. In an embodiment of the present disclosure, the all-solid-state battery includes a negative electrode, a positive electrode, and a solid electrolyte membrane interposed between the negative electrode and the positive electrode. Either the negative electrode or the positive electrode or both include the solid electrolyte composite according to the present disclosure. The solid electrolyte membrane includes at least one of a polymer-based solid electrolyte material, an oxide-based solid electrolyte material and a sulfide-based solid electrolyte material, and may be applied to the battery in the form of a thin ion conductive film. The solid electrolyte membrane serves to provide an ion conduction path between the positive electrode and the negative electrode, and at the same time, electrically insulate the positive electrode and the negative electrode. Preferably, the solid electrolyte membrane has ionic conductivity of 1 X 10⁻⁷ S/cm or above.

Additionally, the present disclosure provides a battery module including the all-solid-state battery as a unit battery, a battery pack including the battery module and a device including the battery pack as a power source. In this instance, a specific example of the device may include, but is not limited to, power tools; electric vehicles including Electric Vehicles (EVs), Hybrid Electric Vehicles (HEVs), Plug-in Hybrid Electric Vehicles (PHEVs); electric two wheelers including E-bikes and E-scooters; electric golf carts; and power storage systems, operated by power from an electric motor.

Hereinafter, the present disclosure is described in more detail through examples, but the following examples are provided to describe the present disclosure by way of illustration, and the scope of the present disclosure is not limited thereto.

### Example 1

### (1) Preparation of solid electrolyte composite

Ethylene carbonate and diethyl carbonate are mixed in at a 1: 1 volume ratio, and 1M LiPF6 is added thereto (solution 1). Subsequently, 1M LiPF6 in vinylene carbonate is prepared (solution 2). The solution 1 and the solution 2 are mixed at a volume ratio of 60:40 to prepare solution 3. An initiator (AIBN) is added to the solution 3 at the concentration of 0.5 wt% (solution 4). Subsequently, LAGP solid electrolyte powder (Li_{1.5}Al_{0.5}Ge_{1.5}(PO₄)₃) is added to the solution 4 at the concentration of 10 wt% and stirred overnight at room temperature (solution 5). Subsequently, the solution 5 is filtered, and the solid electrolyte powder is dried under a vacuum at room temperature to remove the residual solvent. Subsequently, secondary vacuum drying is performed by heat treatment (80°C), initiating the polymerization of the vinylene carbonate coated on the surface of the electrolyte powder, thereby obtaining a solid electrolyte composite having a polyvinylene carbonate passivation layer.

### (2) Manufacture of negative electrode

Graphite, carbon black, polyvinylidene fluoride (PVDF) and the solid electrolyte composite are mixed at a weight ratio of 80: 1: 4: 15, the mixture is applied to a 20 µm thick copper thin film using a doctor blade, and the result is dried under a vacuum at 60°C for 4 hours. Subsequently, the vacuum dried result is rolled using a roll press to obtain an electrode having the electrode loading of 2 mAh/cm², the electrode layer thickness of 48 µm and the porosity of 22 vol%.

### (3) Manufacture of battery

The manufactured negative electrode is punched into a round shape of 1.4875 cm². A lithium metal thin film cut into a round shape of 1.7671 cm² is prepared as a counter electrode. A solid electrolyte film is interposed between the two electrodes to manufacture a coin-type half-cell (100 µm in thickness). For the solid electrolyte membrane, a mixture of polyethylene oxide (PEO) and LiTFSI at [EO]/[Li⁺] = 9: 1 (molar ratio) is used.

### Example 2

### (1) Preparation of solid electrolyte composite

A solid electrolyte composite is obtained by the same method as Example 1, except that LPS solid electrolyte powder (Li₂S-P₂S₅) is used instead of LAGP solid electrolyte powder (Li_{1.5}Al_{0.5}Ge_{1.5}(PO₄)₃).

### (2) Manufacture of negative electrode

An electrode is obtained by the same method as Example 1, except that graphite, carbon black, polyvinylidene fluoride (PVDF) and the solid electrolyte composite are mixed at a weight ratio of 67: 1: 2: 30. The obtained electrode has the electrode loading of 2 mAh/cm², the electrode layer thickness of 48 µm and the porosity of 22 vol%.

### (3) Manufacture of battery

A coin-type half-cell is manufactured by the same method as Example 1.

### Comparative Example 1

### (1) Manufacture of negative electrode

Graphite, carbon black, polyvinylidene fluoride (PVDF) and LAGP solid electrolyte powder (Li_{1.5}Al_{0.5}Ge_{1.5}(PO₄)₃) are mixed at a weight ratio of 80: 1: 4: 15, the mixture is applied to a 20 µm thick copper thin film using a doctor blade, and the result is dried under a vacuum at 60°C for 4 hours. Subsequently, the vacuum dried result is rolled using a roll press to obtain an electrode having the electrode loading of 2 mAh/cm², the electrode layer thickness of 48 µm and the porosity of 22 vol%.

### (2) Manufacture of battery

The manufactured negative electrode is punched into a round shape of 1.4875 cm². A lithium metal thin film cut into a round shape of 1.7671 cm² is prepared as a counter electrode. A solid electrolyte layer (100 µm in thickness) is interposed between the two electrodes to manufacture a coin-type half-cell. For the solid electrolyte membrane, a mixture of polyethylene oxide (PEO) and LiTFSI at [EO]/[Li⁺] = 9: 1 (molar ratio) is used.

### Comparative Example 2

### (1) Manufacture of negative electrode

A negative electrode is obtained by the same method as Comparative Example 1, except that LPS solid electrolyte powder (Li₂S-P₂S₅) is used instead of LAGP solid electrolyte powder (Li_{1.5}Al_{0.5}Ge_{1.5}(PO₄)₃), and graphite, carbon black and polyvinylidene fluoride (PVDF) and the LPS solid electrolyte powder are mixed at a weight ratio of 67: 1: 2: 30. The obtained electrode has the electrode loading of 2 mAh/cm², the electrode layer thickness of 48 µm and the porosity of 22 vol%.

### (2) Manufacture of battery

The manufactured negative electrode is punched into a round shape of 1.4875 cm². A lithium metal thin film cut into a round shape of 1.7671 cm² is prepared as a counter electrode. A solid electrolyte layer (100 µm in thickness) is interposed between the two electrodes to manufacture a coin-type half-cell. For the solid electrolyte membrane, a mixture of polyethylene oxide (PEO) and LiTFSI at [EO]/[Li⁺] = 9: 1 (molar ratio) is used.

### Comparative Example 3

### (1) Preparation of solid electrolyte composite

Polyethylene oxide (PEO) and LiTFSI are added to acetonitrile at a weight ratio of 6: 4 and mixed together (solution 1). An initiator (AIBN) is added to the solution 1 at the concentration of 0.5 wt% (solution 2). Subsequently, LPS solid electrolyte powder (Li₂S-P2S5) is added to the solution 2 at the concentration of 10 wt% and stirred overnight at room temperature (solution 3). Subsequently, the solution 3 is filtered, and the solid electrolyte powder is dried under a vacuum at room temperature to remove the residual solvent. Subsequently, secondary vacuum drying is performed by heat treatment (80°C), thereby obtaining a solid electrolyte composite having a PEO passivation layer on the surface of the electrolyte powder.

### (2) Manufacture of negative electrode

Graphite, carbon black and polyvinylidene fluoride (PVDF) and the solid electrolyte composite are mixed at a weight ratio of 67: 1: 2 : 30, the mixture is applied to a 20 µm thick copper thin film using a doctor blade, and the result is dried under a vacuum at 60°C for 4 hours. The vacuum dried result is rolled using a roll press to obtain an electrode having the electrode loading of 2 mAh/cm², the electrode layer thickness of 48 µm and the porosity of 22 vol%.

### (3) Manufacture of battery

The manufactured negative electrode is punched into a round shape of 1.4875 cm². A lithium metal thin film cut into a round shape of 1.7671 cm² is prepared as a counter electrode. A solid electrolyte film (100 µm in thickness) is interposed between the two electrodes to manufacture a coin-type half-cell. For the solid electrolyte membrane, a mixture of polyethylene oxide (PEO) and LiTFSI in [EO]/[Li⁺] = 9: 1 (molar ratio) is used.

### Evaluation of electrochemical properties

The initial efficiency is evaluated by charging/discharging the batteries prepared in each of the Examples and Comparative Examples under the following conditions. The experimental temperature is room temperature (25°C).
Charged at 0.1C to 0.005V in CC / CV mode, 0.05C cut-off
Discharged at 0.1C to 1.5V in CC mode.

The results are summarized in Table 1 below. According to the results, in the case of comparative examples, due to reduction reaction of the electrolyte at low potential (less than 1V) in the initial charge, the charge capacity is too high and the initial efficiency is low, while in the case of examples, side reactions of the electrolyte are suppressed and the charge capacity is improved compared to comparative examples.

**[Table 1]**

| | Charge capacity (mAh/g) | Discharge capacity (mAh/g) | Initial efficiency (%) |
|---|---|---|---|
| Example 1 | 390 | 352 | 90.3 |
| Example 2 | 387 | 348 | 89.9 |
| Comparative Example 1 | 540 | 350 | 64.8 |
| Comparative Example 2 | 420 | 340 | 81.0 |
| Comparative Example 3 | 355 | 290 | 81.7 |

## Claims

1. A solid electrolyte composite comprising:
a particulate solid electrolyte material; and
a passivation film covering all or at least part of the solid electrolyte material,
wherein the passivation film has ionic conductivity of 1 X 10⁻⁵ s/cm or above and electronic conductivity of 1 X 10⁻⁹ s/cm or less.

2. The solid electrolyte composite according to claim 1, wherein the passivation film is 10 nm to 1 µm in thickness.

3. The solid electrolyte composite according to claim 1, wherein the passivation film comprises a polyvinylene carbonate-based polymer.

4. The solid electrolyte composite according to claim 3, wherein the polyvinylene carbonate-based polymer comprises vinylene carbonate as a polymerizable unit.

5. The solid electrolyte composite according to claim 4, wherein the polyvinylene carbonate-based polymer comprises vinylene carbonate as a polymerizable unit, and further comprises a second polymerizable unit that can be polymerized with the vinylene carbonate, and
the second polymerizable unit is at least one selected from acrylonitrile, methyl methacrylate, styrene, vinyl pyrrolidone, vinyl acetate, vinyl alcohol and vinyl chloride.

6. The solid electrolyte composite according to claim 1, wherein the solid electrolyte material comprises at least one selected from a polymer-based solid electrolyte, an oxide-based solid electrolyte and a sulfide-based solid electrolyte.

7. The solid electrolyte composite according to claim 6, wherein the oxide-based solid electrolyte contains oxygen (O) and has ionic conductivity of a metal belonging to Group I or Group II of the periodic table, and
the oxide-based solid electrolyte comprises at least one of LLTO-based compound, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compound, LATP-based compound, Li₁₊ₓTi₂₋ₓAlₓSi_{y}(PO₄)_{3-y} (0 ≤ x ≤ 1, 0 ≤ y ≤ 1), LiAlₓZr₂₋ₓ(PO₄)₃(0 ≤ x ≤ 1, 0 ≤ y ≤ 1), LiTiₓZr₂₋ₓ(PO₄)₃ (0 ≤ x ≤ 1, 0 ≤ y ≤ 1), LISICON-based compound, LIPON-based compound, perovskite-based compound, NASICON-based compound and LLZO-based compound.

8. An electrode for an all-solid-state battery comprising the solid electrolyte composite according to any one of claims 1 to 7, an electrode active material and a conductive material.

9. An all-solid-state battery comprising the solid electrolyte composite according to any one of claims 1 to 7.

10. The all-solid-state battery according to claim 9, wherein the all-solid-state battery comprises a negative electrode, a positive electrode and a solid electrolyte membrane interposed between the negative electrode and the positive electrode, and
either the negative electrode or the positive electrode or both comprise the solid electrolyte composite.

11. A method for manufacturing the solid electrolyte composite according to claim 1, the method comprising:
(S1) coating a passivation layer composition on a surface of a particulate solid electrolyte material; and
(S2) providing the coated solid electrolyte material to polymerization reaction,
wherein the passivation layer composition comprises vinylene carbonate, a lithium salt, a polymerization initiator and a non-aqueous organic solvent.
